# EUROPÄISCHE PATENTSCHRIFT

(11) **EP 0 390 976 B1**
(45) Veröffentlichungstag und Bekanntmachung des Hinweises auf die Patenterteilung: **20.04.1994**
(21) Anmeldenummer: 89123272.0
(22) Anmeldetag: 15.12.1989
(51) Int. Cl.: H04Q 11/04

(54) **Verfahren für Kommunikations-Vermittlungsanlagen mit Tonfrequenz-Tastwahl**
Process for communication exchanges with audio frequency push-button dialing
Procédé pour centraux de communications avec sélection par touches à fréquence audio

(30) Priorität: 01.04.1989 DE 3910533
(43) Veröffentlichungstag der Anmeldung: 10.10.1990
(73) Patentinhaber: TELENORMA GMBH, 60326 Frankfurt am Main (DE)
(72) Erfinder: Rüdiger, Thomas, Dipl.-Ing., D-6231 Sulzbach/Ts. (DE); Wagner, Horst, Dipl.-Ing., D-6000 Frankfurt 50 (DE)

(56) Entgegenhaltungen:
- DE-A- 2 247 744
- IBM TECHNICAL DISCLOSURE BULLETIN, Bd. 27, Nr. 1b, Juni 1984, NEW YORK, US, Seiten 755-758; D.W. Kimberly et al: "DTMF/DP Card"
- ERICSSON REVIEW, Bd. 59, Nr. 1, 1982, STOCKHOLM, SE, Seiten 14-21; "Digital Signal Processing in System MD 110"

## Beschreibung

Die Erfindung betrifft ein Verfahren für Kommunikations-Vermittlungsanlagen mit Tonfrequenz-Tastwahl nach dem Oberbegriff des Patentanspruchs 1.
Aus der DE-OS 22 47 744 ist eine Fernsprechvermittlungsstelle mit Tonwähltastatur bekannt. Bei dieser Fernsprechvermittlungsstelle sind die Teilnehmeranschlüsse zum Erzeugen von tonfrequenten Wähltastatursignalen eingerichtet. Auch auf der Externleitung werden tonfrequente Wahlinformationen gesendet und empfangen. Da bei dieser Fernsprechvermittlungsstelle davon ausgegangen wird, daß Teilnehmeranschlußleitungen zu lang sein könnten, womit eine große Dampfung verbunden wäre, werden die von einer Teilnehmerstelle aus abgegebenen Tonfrequenzsignale in der Vermittlungsstelle regeneriert. Bei einer abgehenden Verbindung werden einer Externleitung ein Tonfrequenzempfänger und ein Tonfrequenzsender zugeordnet.
Die von einem Teilnehmeranschluß kommenden Tonfrequenzsignale werden dann von dem Tonfrequenzempfänger empfangen, gelangen zu einem Tonfrequenzsender und werden von diesem auf die Externleitung gesendet.
Bei dieser Verfahrensweise wird zwar erreicht, daß Dämpfungen auf einer Teilnehmeranschlußleitung sich nicht auch auf die Externleitung auswirken, es wird jedoch bei der Regenerierung der Wahkinformation eine Verzögerung auftreten. In der vorgenannten Offenlegungsschrift ist nicht erwähnt, daß auch Teilnehmeranschlüsse mit anderen Wahlverfahren z.B. Gleichstrom-Impulswahl an dieser Fernsprechvermittlungsstelle betrieben werden können.
Die Aufgabe der Erfindung besteht darin, ein Verfahren anzugeben, womit bei Kommunikations-Vermittlungsanlagen, insbesondere Fernsprechnebenstellenanlagen, gleiche Prozeduren angewendet werden können, wenn Teilnehmeranschlüsse und auch Externleitungen mit unterschiedlichen Wahlverfahren vorhanden sind, wobei außerdem bei mit Tonfrequenzwahl betriebene Externleitungen eine direkte verzögerungsfreie Durchgabe der Wahlinformation vom Teilnehmeranschluß aus möglich ist, wenn dieser das Tonfrequenz-Wahlverfahren hat.
Die zur Lösung vorgesehenen Merkmale sind im Patentanspruch 1 angegeben.
Damit wird in vorteilhafter Weise erreicht, daß Teilnehmeranschlüsse mit unterschiedlichen Wahlverfahren sowohl untereinander als auch mit Externleitungen verbunden werden können, welche ebenfalls mit unterschiedlichen Wahlverfahren betrieben werden können, wobei jeweils gleichartige Prozeduren ablaufen, ohne daß festgestellt werden muß, welches Wahlverfahren der eine Verbindung aufbauende Teilnehmeranschluß hat. Mit diesem Verfahren wird außerdem erreicht, daß von einem Teilnehmeranschluß aus mit tonfrequenter Tastwahl eine direkte Durchgabe der Wahlinformation zur Externleitung möglich ist, wenn diese ebenfalls mit dem Tonfrequenz-Wahlverfahren betrieben wird.

Mit den in den Unteransprüchen angegebenen Weiterbildungen der Erfindung werden bezogen auf den Anwendungsfall weitere Vorteile erreicht.

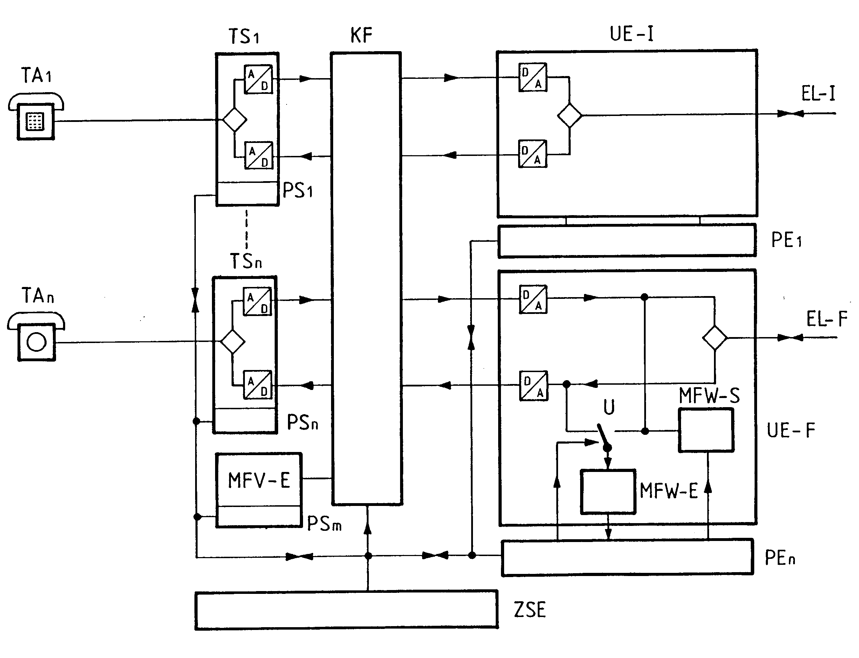

Ein Ausführungsbeispiel der Erfindung wird nachfolgend anhand einer Zeichnung näher erläutert. In der Zeichnung ist das Blockschaltbild eher Kommunikations-Vermittlungsanlage dargestellt, welche bei diesem Ausführungsbeispiel digital nach dem Zeitmultiplex-Prinzip durchschaltet. An die Kommunikations-Vermittlungsanlage sind Teilnehmerapparate TA1 bis TAn angeschlossen, welche unterschiedliche Wahlverfahren haben. Diese Teilnehmerapparate können über Teilnehmeranschlußschaltungen TS1 bis TSn sowohl untereinander als auch mit Externleitungen verbunden werden. Dazu dient ein Koppelfeld KF, welches von einer zentralen Steuereinrichtung ZSE den jeweiligen Verbindungsanforderungen entsprechend eingestellt wird. Da das Koppelfeld KF digital durchschaltet, müssen Analogsignale in Digitalsignale umgewandelt werden, wenn sie dem Koppelfeld angeboten werden. Auf der ankommenden Seite einer Verbindung findet dementsprechend eine Digital-Ahalog-Wandlung statt. Hierzu sind in bekannter Weise den jeweiligen Anschlußschaltungen Analog-Digital-Wandler und auch Digital-Analog-Wandler zugeordnet.
Wenn von Teilnehmerapparaten TA aus ein Verbindungsaufbau eingeleitet wird, so wird die Wahlinformation bei Teilnehmerapparaten TAn mit Nummernschalterwahl von der jeweils zuständigen peripheren Steuereinrichtung PSn aufgenommen, während beim Verbindungsaufbau von einem Teilnehmerapparat TA1 aus mit tonfrequenter Tastwahl ein zentral angeordneter Mehrfrequenzempfänger MFV-E angekoppelt wird, um die tonfrequente Wahlinformation aufzunehmen.
In beiden Fällen gelangt die Wahlinformation gleichermaßen zur Auswertung in die zentrale Steuereinrichtung ZSE. Wenn sich dabei herausstellt, daß eine Ekternverbindung gewünscht wird, so wird eine der gewünschten Richtung entsprechende Externleitung EL-I oder EL-F belegt. Danach sind von dem betreffenden Teilnehmerapparat TA aus weitere Wahlinformationen für den Verbindungsaufbau abzugeben, wenn die Wahlaufnahmebereitschaft von der Gegenanlage aus signalisiert wird.
Auch diese Wahlinformation gelangt in einheitlicher Weise, unabhängig davon, welches Wahlverfahren beim Teilnehmerapparat angewendet wird, ausgehend von der dezentralen Steuereinrichtung PSn, bzw. PSm bei tonfrequenter Tastwahl, über die zentrale Steuereinrichtung ZSE zu der peripheren Steuereinrichtung PE1,PEn der jeweils belegten Externleitung EL-I,EL-F.
Wenn die betreffende Externleitung EL-I mit Gleichstrom-Impulswahl betrieben wird, so werden aus der angebotenen Wahlinformation in bekannter Weise Impulsreihen erzeugt, wie sie beim Ablauf eines Nummernschalters entstehen. Bei Externleitungen EL-F, welche nach dem Mehrfrequenzverfahren MFV betrieben werden, ist ein Mehrfrequenzwahlsender MFW-S vorgesehen, welcher mit der über Signalisierungswege ankommenden Wahlinformation angesteuert wird. Jede einzelne Wahlziffer wird dabei in Form eines aus zwei Frequenzen bestehenden Tonfrequenzsignals gebildet.
Dieses einheitliche Wahlübertragungsverfahren wird auch dann angewendet, wenn das Wahlverfahren des Teilnehmerapparates, z.B. TAn mit dem Wahlverfahren, der belegten Externleitung, z.B. EL-I übereinstimmt, obwohl dann eine Umsetzung nicht nötig wäre. Für den Fall der Impulswahl ist eine derartige Vorgehensweise notwendig, weil es nicht ohne weiteres möglich ist, Gleichstrom-Impulsreihen über das Koppelfeld KF zu übertragen. Dagegen ist es ohne weiteres möglich, die nach dem Mehrfrequenzverfahren MFV abgegebene Wahlinformation direkt vom Teilnehmerapparat TA1 über das Koppelfeld KF zu einer Externleitung EL-F zu bringen, welche mit dem gleichen Mehrfrequenzverfahren MFV betrieben wird. Es wird jedoch darauf verzichtet, Unterschiede bei der Wahlütertragung zu machen, weil sonst bei jedem Verbindungsaufbau über eine Externleitung festgestellt werden müßte, welches Wahlverfahren beim Teilnehmerapparat TA vorliegt.
Hierzu wäre eine Identifizierung notwendig, wobei das Wahlverfahren des Teilnehmerapparates TA festgestellt wird.

Wenn jedoch, wie dies zuvor beschrieben worden ist, ein einheitliches Verfahren bei der Wahlübertragung zu einer Externleitung EL-I, EL-F angewendet wird, so können bei der abgehenden Belegung einer Externleitung EL-F, welche mit dem Mehrfrequenzverfahren MFV betrieben wird, Schwierigkeiten auftreten, wenn die Verbindung von einem Teilnehmerapparat TA1 aus aufgebaut wird, bei dem ebenfallsdas Mehrfrequenzverfahren MFV angewendet wird. Die Wahlinformation gelangt nämlich in diesem Fall einmal direkt über das Koppelfeld KF, also über den Sprechweg zu der Übertragung UE-F und damit zur Externleitung EL-F und andererseits über den bereits beschriebenen Signalisierungsweg, also überdie Steuereinrichtung. Um zu verhindern, daß in der einer solchen Externleitung EL-F zugeordneten Übertragung UE-F die direkt ausgesendete Wahlinformation durch die umgesetzte Wahlinformation verfälscht wird, wird ein Mehrfrequenzwahlempfänger MFW-E an den Sprechweg angeschaltet. Hierbei handelt es sich um den gleichen Mehrfrequenzwahlempfänger MFW-E, der für das Empfangen von Wahlinformation bei einer ankommenden Belegung vorgesehen ist. Mit diesem Mehrfrequenzwahlempfänger MFW-E wird bei einer abgehenden Belegung festgestellt, ob tonfrequente Wahlinformation auf dem Sprechweg gesendet wird. Wenn der Mehrfrequenzwahlempfänger MFW-E daraufhin anspricht, so wird dies der peripheren Steuereinrichtung PEn, welche der betreffenden Übertragung UE-F zugeordnet ist, gemeldet. Daraufhin wird innerhalb dieser peripheren Steuereinrichtung PEn verhindert, daß über den Signalisierungsweg ankommende Wahlinformation an den Mehrfrequenzwahlsender MFW-S gelangt. Somit wird erreicht, daß ausschließlich die direkte Durchgabe der Tonfrequenz-Wahlinformation stattfindet, wenn ein mit Tonfrequenzwahl ausgestatteter Teilnehmerapparat TA1 mit einer Externleitung EL-F verbunden ist, welche ebenfalls nach dem Tonfrequenz-Wahlverfahren arbeitet.

Wenn in einer Kommunikations-Vermittlungsanlage eine vierdrähtige Durchschaltung vorgesehen ist, wie dies hier am Beispiel einer digital durchschaltenden Kommunikations-Vermittlungsanlage gezeigt wird, so ist innerhalb der einer nach dem Mehrfrequenzwahlverfahren arbeitenden Externleitung EL-F zugeordneten Übertragung UE-F eine Umschalteinrichtung vorgesehen. Diese Umschalteinrichtung U ist so ausgeführt, daß im Ruhezustand der für den Empfang tonfrequenter Tastwahl vorgesehene Mehrfrequenzwahlempfänger MFW-E an den ankommenden Zweig des Sprechweges angeschaltet ist. Somit werden bei einer ankommenden Belegung die tonfrequenten Wahlinformationen empfangen und über die periphere Steuereinrichtung PEn zur zentralen Steuereinrichtung ZSE gegeben. Bei einer abgehenden Belegung wird mit einem in der peripheren Steuereinrichtung PEn erzeugten Schaltbefehl der Mehrfrequenzwahlempfänger MFW-E so umgesteuert, daß er nun mit dem abgehenden Zweig des Sprechweges verbunden ist. Auf diese Weise empfängt der Mehrfrequenzwahlempfänger MFW-E auf direktem Wege die abgehende Wahlinformation noch bevor die über den Signalisierungsweg übertragene Wahlinformation an den Mehrfrequenzwahlsender MFW-S gelangen kann. Somit ist gewährleistet, daß die von einem Teilnehmerapparat TA1 ausgehende Tonfrequenz-Wahlinformation auf direktem Weg ohne Verzögerung zu einer Externleitung EL-F gelangt, welche ebenfalls nach dem Mehrfrequenzverfahren MFV arbeitet, ohne daß eine Beeinflussung durch den Mehrfrequenzsender MFW-S stattfinden kann.

## Patentansprüche

1. Verfahren zur direkten verzögerungsfreien Durchgabe von Wahlinformation für Kommunikations-Vermittlungsanlagen mit Tonfrequenz-Tastwahl, insbesondere für Fernsprechnebenstellenanlagen, bei denen auf Externleitungen Tonfrequenz-Wahlinformation gesendet und empfangen wird, und Teilnehmerapparate mit unterschiedlichem Wahlverfahren angeschlossen werden können,
dadurch gekennzeichnet,
daß die von einem Teilnehmerapparat (TA1, TAn) kommende und über eine Externleitung(EL-I, EL-F) auszusendende Wahlinformation unabhängig von dem beim Teilnehmerapparat (TA) angewendeten Wahlverfahren über Steuerleitungen und Steuereinrichtungen (PS,ZSE,PE) zu einer der jeweils belegten Externleitung (EL-I,EL-F) zugeordneten Übertragung (UE-I,UE-F) gelangt,
daß bei nach dem Mehrfrequenz-Verfahren arbeitenden Externleitungen (EL-F) Tonfrequenzsender (MFW-S) angeschlossen sind,
daß ein für das Empfangen von über die Externleitung (EL-F) ankommenden tonfrequenten Wahlinformationen vorgesehener Tonfrequenzempfänger (MFW-E) auch bei abgehenden Verbindungen an den Sprechweg angeschaltet wird und anspricht, wenn von Teilnehmerapparaten (TA1) mit Tonfrequenzen über die Externleitung (EL-F) gewählt wird,
und daß dann der Tonfrequenzsender (MFW-S) gesperrt wird, um nur das direkte Aussenden der Wahlinformation zu ermöglichen.

2. Verfahren nach Anspruch 1,
dadurch gekennzeichnet,
daß bei Kommunikations-Vermittlungsanlagen mit vierdrähtiger Durchschaltung eine Umschalteinrichtung (U) pro Externleitung (EL-F) vorgesehen ist, womit der zugeordnete Tonfrequenzempfänger (MFW-E) bei abgehender Belegung an die zur Externleitung führende Richtung angeschaltet wird.

3. Verfahren nach Anspruch 1,
dadurch gekennzeichnet,
daß die für das Aussenden von tonfrequenter Wahlinformation vorgesehenen Tonfrequenzsender (MFW-S) zentral angeordnet sind und bei Bedarf an die jeweils abgehend belegte Externleitung (EL-F) angekoppelt werden.

## Claims

1. Method for direct delay-free transmission of dialling information for communications exchanges with audio frequency pushbutton dialling, especially for telephone extension exchange, in which voice frequency dialling information is transmitted and received on outside lines and subscriber sets can be connected by different dialling methods, characterised thereby that the dialling information coming from a subscriber set (TA1, TAn) and to be transmitted by way of an outside line (EL-I, EL-F) is passed, independently of the dialling method used at the subscriber set (TA), by way of control lines and control devices (PS, ZSE, PE) to a relay repeater (UE-I, UE-F) associated with the respective occupied outside line (EL-I, EL-F), that voice frequency transmitters (MFW-S) are connected in the case of outside lines (EL-F) operating according to the multifrequency method, that a voice frequency receiver (MFW-E) provided for the reception of voice frequency dialling information arriving by way of the outside line (EL-F) is also connected to the speech channel in the case of outgoing connections and responds if dialled by subscriber sets (TA1) with voice frequency by way of the outside line (EL-F), and that the voice frequency transmitter (MFW-S) is then blocked so as to make possible only the direct transmission of dialling information.

2. Method according to claim 1, characterised thereby that a changeover device (U) is provided for each outside line (EL-F) in the case of communications exchanges with four-wire connection, whereby the associated voice frequency receiver (MFW-E) is connected in the case of outgoing occupation to the direction leading to the external line.

3. Method according to claim 1, characterised thereby that the voice frequency transmitters (MFW-S) provided for the transmission of voice frequency dialling information are arranged centrally and are coupled to the respective outgoing occupied external line (EL-F) in the case of need.

## Revendications

1. Procédé pour le transfert direct et sans retard d'une information de sélection pour des installations de commutation de communication avec sélection par touches à fréquences audio, notamment pour des installations téléphoniques à installation de commutation de communication privées, dans lesquelles une information de sélection à fréquences audio est transmise et reçues par l'intermédiaire de lignes externes, et des postes d'abonnés comportant des procédures différentes de sélection peuvent être raccordés,
caractérisé en ce
que l'information de sélection, qui arrive d'un poste d'abonné (TR1, TRn) et qui doit être émise par l'intermédiaire d'une ligne externe (EL-I, EL-F) parvient, indépendamment du procédé de sélection utilisé dans le poste d'abonné (TA), par l'intermédiaire de lignes de commande et de dispositifs de commande (PS, ZSE, PE), à un translateur (UE-I, UE-F) associé à la ligne externe (EL-I, EL-F) respectivement occupée,
que dans le cas de lignes externes (EL-F) travaillant selon un procédé à fréquences multiples, des émetteurs à fréquences audio (MFW-S) sont raccordés,
qu'un récepteur de fréquences audio (FW-E), qui est prévu pour la réception d'informations de sélection à fréquences audio, qui arrivent par l'intermédiaire de la ligne externe EL-F, est également raccordé à la voie téléphonique, également pour des liaisons de départ et répond lorsqu'une sélection est réalisée par des postes téléphoniques (TA1) avec des fréquences audio par l'intermédiaire de la ligne externe (EL-F), et
qu'ensuite l'émetteur à fréquences audio (MFW-S) est bloqué, de manière à permettre uniquement l'émission directe de l'information de sélection.

2. Procédé selon la revendication 1, caractérisé en ce que dans le cas d'installations de commutation de communication comportant une interconnexion à quatre fils, un dispositif de commutation (U) est prévu pour chaque ligne externe (EL-F), ce qui a pour effet que le récepteur associé à fréquences audio (MFW-E) est raccordé, dans le cas d'une occupation dans le sens départ, à la direction aboutissant à la ligne externe.

3. Procédé selon la revendication 1, caractérisé en ce que les émetteurs à fréquences audio (MFW-S), prévus pour l'émission d'une information de sélection à fréquences audio, sont disposés d'une manière centrale et, le cas échéant, sont accouplés à la ligne externe (EL-F) occupée respectivement dans le sens départ.
